# EUROPÄISCHE PATENTANMELDUNG

(11) **EP 3 136 063 A1**
(43) Veröffentlichungstag der Anmeldung: **01.03.2017**
(21) Anmeldenummer: 15465531.0
(22) Anmeldetag: 25.08.2015
(51) Int. Cl.: G01F 23/00, G01F 23/296

(54) **VORRICHTUNG UND VERFAHREN ZUR MESSUNG DES FÜLLSTANDES IN EINEM KRAFTSTOFFTANK**

(71) Anmelder: Continental Automotive GmbH, 30165 Hannover (DE)
(72) Erfinder: Tirzioru, Bogdan, 700685 Iasi (RO); Turcanu, Alexandru, Iasi (RO)

(57) **Zusammenfassung**

Die Erfindung betrifft eine Vorrichtung zur Messung des Füllstandes in einem Kraftstofftank eines Kraftfahrzeugs mit einer Sendeeinheit zur Aussendung von Ultraschallsignalen, mit einer Empfangseinheit für den Empfang der reflektierten Ultraschallsignale und mit einer Recheneinheit zur Ermittlung des Füllstandes durch Auswertung der Laufzeit der Ultraschallsignale zwischen Aussendung und Empfang, wobei zur Ermittlung eines Messwertes zumindest ein Ultraschallsignal ausgesendet und empfangen wird, wobei der Füllstand als Füllstandsignal von der Recheneinheit ausgebbar ist, wobei die Recheneinheit einen ersten Filter und einen zweiten Filter aufweist, wobei durch den ersten Filter eine Selektion der Messwerte durchführbar ist und durch den zweiten Filter eine Glättung des Füllstandsignals durchführbar ist. Außerdem betrifft die Erfindung ein Verfahren zum Betrieb der erfindungsgemäßen Vorrichtung.

## Beschreibung

### Technisches Gebiet

Die Erfindung betrifft eine Vorrichtung zur Messung des Füllstandes in einem Kraftstofftank eines Kraftfahrzeugs mit einer Sendeeinheit zur Aussendung von Ultraschallsignalen, mit einer Empfangseinheit für den Empfang der reflektierten Ultraschallsignale und mit einer Recheneinheit zur Ermittlung des Füllstandes durch Auswertung der Laufzeit der Ultraschallsignale zwischen Aussendung und Empfang, wobei zu einer Messung zumindest ein Ultraschallsignal ausgesendet und empfangen wird, wobei der Füllstand als Füllstandsignal von der Recheneinheit ausgebbar ist. Außerdem betrifft die Erfindung ein Verfahren zum Betrieb der erfindungsgemäßen Vorrichtung.

### Stand der Technik

Zur Ermittlung des Füllstandes eines Kraftstofftanks sind unterschiedlichen Vorrichtungen und Verfahren im Stand der Technik bekannt. Unter anderem sind Füllstandsgeber bekannt, die mittels eines Schwimmkörpers, der auf der Oberfläche des Kraftstoffvolumens schwimmt, den Füllstand erfassen. Hierzu ist der Schwimmkörper über einen Hebelarm mit einer Positionssensorik gekoppelt, die eine Übersetzung der Position des Schwimmkörpers in einen Füllstand vornimmt.

Alternativ sind Füllstandsgeber bekannt, die den Füllstand in dem Kraftstofftank ohne mechanische Hilfsmittel erfassen, indem beispielsweise Ultraschallwellen eingesetzt werden. Über einen geeigneten Sender und Empfänger kann so der Füllstand in einem Kraftstofftank bestimmt werden.

Nachteilig an den Füllstandsensoren, die nach dem Ultraschallprinzip arbeiten ist insbesondere, dass sie keine ausreichende Genauigkeit aufweisen, wenn der Kraftstoff in Blasen gebundene Gasanteile aufweist. Durch die hohe Dynamik beim Betrieb eines Kraftfahrzeugs kann es zu einem Aufschäumen des Kraftstoffs kommen, wodurch die Genauigkeit der Ultraschallmessung negativ beeinträchtigt wird. Es kann im Zuge der Aufschäumung zu einer Schaumbildung kommen, die die korrekte Bestimmung des Füllstandes erschwert beziehungsweise unmöglich macht.

Darstellung der Erfindung, Aufgabe, Lösung, Vorteile

Daher ist es die Aufgabe der vorliegenden Erfindung eine Vorrichtung und ein Verfahren zu schaffen, welche eine genaue Bestimmung des Füllstandes mittels eines Ultraschallsenders ermöglichen, wobei auch die Fehlereinflüsse eines aufgeschäumten Kraftstoffs minimiert werden.

Die Aufgabe hinsichtlich der Vorrichtung wird durch eine Vorrichtung mit den Merkmalen von Anspruch 1 gelöst.

Ein Ausführungsbeispiel der Erfindung betrifft eine Vorrichtung zur Messung des Füllstandes in einem Kraftstofftank eines Kraftfahrzeugs mit einer Sendeeinheit zur Aussendung von Ultraschallsignalen, mit einer Empfangseinheit für den Empfang der reflektierten Ultraschallsignale und mit einer Recheneinheit zur Ermittlung des Füllstandes durch Auswertung der Laufzeit der Ultraschallsignale zwischen Aussendung und Empfang, wobei zur Ermittlung eines Messwertes zumindest ein Ultraschallsignal ausgesendet und empfangen wird, wobei der Füllstand als Füllstandsignal von der Recheneinheit ausgebbar ist, wobei die Recheneinheit einen ersten Filter und einen zweiten Filter aufweist, wobei durch den ersten Filter eine Selektion der Messwerte durchführbar ist und durch den zweiten Filter eine Glättung des Messwerte durchführbar ist.

Eine Vorrichtung zum Erfassen des Füllstandes in einem Kraftstofftank, die Ultraschallsignale verwendet ist besonders vorteilhaft, da keine weiteren mechanischen Komponenten benötigt werden, um den Füllstand zu erfassen. Hierzu wird ein Ultraschallsignal von einer Sendeeinheit in den Kraftstofftank ausgesendet. Das Ultraschallsignal wird an einer Grenzschicht, wie insbesondere der Oberfläche des Kraftstoffvolumens, reflektiert und von einer Empfangseinheit aufgenommen. Durch die ermittelte Laufzeit können Aussagen über den aktuellen Füllstand getroffen werden.

Eine Recheneinheit beschreibt entweder eine dedizierte elektronische Einheit, die an der Vorrichtung oder im Umfeld der Vorrichtung angeordnet ist oder einen Teil eines weiteren Steuergeräts bildet, welches Rechenkapazität für die Füllstandermittlung zur Verfügung stellt. In der Recheneinheit können insbesondere Messwerte erfasst, zwischengespeichert, verändert oder gelöscht werden. Auch kann die Recheneinheit die jeweils gemessenen Messwerte, welche beispielsweise Laufzeiten der Ultraschallsignale darstellen, in ein Füllstandsignal überführen, welches an eine Anzeigeeinheit im Kraftfahrzeug ausgegeben werden kann. Die Recheneinheit kann selbst Filter als dedizierte Elemente oder als softwaretechnisch abgebildete Elemente aufweisen. Alternativ können die Filter der Recheneinheit auch vorgeschaltet sein.

Besonders vorteilhaft ist es, wenn ein erster Filter vorgesehen ist, der dazu genutzt werden kann, um nicht plausible Messwerte zu eliminieren und dadurch die Güte der Füllstandmessung zu erhöhen. Nicht plausible Messwerte können beispielsweise durch fehlerhaft empfangene Ultraschallsignale verursacht werden oder durch eine starke und dynamische Bewegung des Kraftstoffs im Kraftstofftank. Auch kann das Aufschäumen des Kraftstoffs zu nicht plausiblen Messwerten führen. Der erste Filter ist daher bevorzugt derart ausgebildet, dass er Messwerte, die außerhalb eines definierten Erwartungsraumes liegen, eliminiert. Der Erwartungsraum kann fest vorgegeben werden, oder dynamisch an die Messwerte angepasst werden. Vorteilhaft ist es beispielsweise eine Obergrenze und eine Untergrenze in Relation zu einem Durchschnittswert von einer Mehrzahl von zeitlich unmittelbar nacheinander gemessenen Messwerten zu definieren. Die Grenzen können beispielsweise prozentual festgelegt werden oder in absoluten Werten.

Durch die Orientierung an einem Durchschnittswert beziehungsweise Mittelwert kann sichergestellt werden, dass der Erwartungsraum nicht an einem einzelnen nicht plausiblen Messwert orientiert wird, wodurch die Fehleranfälligkeit deutlich reduziert werden kann.

Der zweite Filter wird vorteilhafterweise dazu genutzt, um eine Glättung der ermittelten Messwerte, die anschließend das Füllstandsignal bilden, zu erreichen. Eine Glättung trägt dazu bei, dass das ausgegebene Füllstandsignal weniger Sprünge aufweist. Sprünge können zu einer hohen Dynamik an der Füllstandanzeige im Kraftfahrzeug führen, welche sich negativ auf die Wahrnehmung des Fahrers auswirken könnte, da die Anzeige keine kontinuierliche Zu- und Abnahme des Füllstandes zeigt, sondern mit den gemessenen Spitzen um den Wert für den tatsächlichen Füllstand schwankt.

Besonders vorteilhaft ist es, wenn der zweite Filter durch einen Filter mit unendlicher Impulsantwort und mit einer vorgebbaren Bandpassfrequenz gebildet ist. Die Bandpassfrequenz kann bevorzugt vorgegeben werden und in einem Speicher, insbesondere einem sogenannten Electrically Erasable Programmable Read-Only Memory (EEPROM) abgelegt werden. Ein solcher Speicher kann auch im stromlosen Zustand den vorgegebenen Wert speichern und kann nur unter Zuhilfenahme von elektrischer Energie gelöscht werden.

Auch ist es vorteilhaft, wenn der erste Filter zur Eliminierung von ungültigen Messwerten ausgebildet ist. Dies ist vorteilhaft, um die Messwerte auszusortieren, die ein falsches Füllstandsignal widerspiegeln. So können insbesondere Fehlmessungen aussortiert werden. Auch können an sich korrekte Messungen, die infolge der hohen Dynamik des Kraftstoffs im Kraftstofftank unrealistische Werte widerspiegeln, eliminiert werden, wodurch die Güte der letztlich ausgegebenen Füllstandsignale verbessert wird. Solche unrealistischen Werte können beispielsweise durch Kurvenfahrten oder Bergfahrten entstehen, während derer der Kraftstoff im Kraftstofftank hin und her schwappt. Auch kann eine Aufschäumung des Kraftstoffs aufgrund der Blasenbildung zu einem unrealistischen Wert führen. Unrealistische Werte sind insbesondere Werte, die im Vergleich zu unmittelbar vorher gemessenen Werten oder unmittelbar nachfolgend gemessenen Werten deutlich abweichen.

Die Aufgabe hinsichtlich des Verfahrens wird durch ein Verfahren mit den Merkmalen von Anspruch 3 gelöst.

Ein Ausführungsbeispiel der Erfindung betrifft ein Verfahren zum Betreiben einer Vorrichtung zur Bestimmung des Füllstandes in einem Kraftstofftank, wobei das Füllstandsignal durch eine Auswertung der Laufzeit einzelner Ultraschallsignale ermittelt wird, wobei im ersten Filter ungültige Messwerte eliminiert werden, wobei zur Eliminierung ungültiger Messwerte eine vorgebbare Anzahl von aufeinanderfolgenden Messwerten gespeichert wird und die Messwerte im ersten Filter verarbeitet werden, wobei die außerhalb eines vorgebbaren Erwartungsraums liegenden Messwerte eliminiert werden.

Das Verfahren sieht die Erfassung von Laufzeiten von Ultraschallsignalen vor, wobei im ersten Filter eine Eliminierung von unrealistischen beziehungsweise ungültigen Messwerten vorgenommen wird. Dies geschieht bevorzugt dadurch, dass eine vorgebbare Anzahl von aufeinanderfolgenden Messwerten zwischengespeichert wird und Messwerte, die außerhalb eines vorgebbaren Erwartungsraums liegen, eliminiert werden. Auf diese Weise können Messspitzen und andere Ausreißer, beispielsweise infolge des temporären Aufschäumens des Kraftstoffs, ausgeglichen werden, so dass ein stetiges Füllstandsignal, welches sich aus den Messwerten ergibt, an eine Anzeigeeinheit im Kraftfahrzeug ausgegeben werden kann. Aufeinanderfolgende Messwerte müssen nicht zwangsweise direkt unmittelbar aufeinanderfolgende Messwerte sein und können auch eine Auswahl aufeinanderfolgender Messwerte sein, beispielsweise jeder zweite Messwert.

Auch ist es zu bevorzugen, wenn der Erwartungsraum abhängig von einem Durchschnittswert der ermittelten Messwerte festgelegt ist. Dies ist vorteilhaft, um den Erwartungsraum an den jeweils kurz vorher und kurz nachher ermittelten Messwerten zu orientieren.

Darüber hinaus ist es vorteilhaft, wenn die Verarbeitung der Messwerte im ersten Filter eine Ermittlung der Unterschiede zwischen den einzelnen Messwerten vorsieht, wobei anhand der Unterschiede der Messwerte die Messwerte identifiziert werden, die außerhalb des vorgebbaren Erwartungsraums liegen, wobei diese identifizierten Messwerte eliminiert werden. Dies ist vorteilhaft, um Ausreißer und Spitzenwerte zu eliminieren, um keine unnötigen Sprünge in den letztlich ausgegebenen Füllstandsignalen zu haben. Dies trägt dazu bei, dass die auf einer Anzeigeneinheit angezeigten Füllstandsignale stetig sind und die Anzeige keine großen Sprünge macht. Durch den Vergleich der Messwerte untereinander unabhängig von absoluten vorgegebenen Werten, kann das Verfahren bei praktisch jedem Füllstand verwendet werden, da der Erwartungsraum mit den jeweils gemessenen Messwerten wandert.

Weiterhin ist es vorteilhaft, wenn im ersten Filter Messwerte, die um einen vorgebbaren Betrag oberhalb oder unterhalb eines aus einer Mehrzahl von Messwerten gewonnen Mittelwert liegen, eliminiert werden. Dies dient der Erhöhung der Signalgüte, da mit hoher Wahrscheinlichkeit davon ausgegangen werden kann, dass Extremwerte und andere Spitzen ein nicht der Realität entsprechendes Füllstandsignal erzeugen.

Auch ist es zweckmäßig, wenn der zweite Filter ein Bandpassfilter Filter mit unendlicher Impulsantwort ist, wobei die Bandpassfrequenz des zweiten Filters vorgebbar ist. Die vorgebbare Bandpassfrequenz ist vorteilhaft, um den Filter auf das jeweilige Kraftfahrzeug und insbesondere den Kraftstofftank anpassen zu können. Auch kann die Dynamik der Vorrichtung durch die Bandpassfrequenz angepasst werden und so dafür Sorge getragen werden, dass eine ausreichend kleine Antwortzeit des Systems erreicht wird.

Darüber hinaus ist es vorteilhaft, wenn die Bandpassfrequenz des zweiten Filters ein Hertz beträgt. Eine Bandpassfrequenz von einem Hertz ist für Tanksysteme besonders vorteilhaft, um sowohl eine ausreichende Dynamik aufzuweisen und gleichzeitig ausreichend kleine Antwortzeiten des Systems zu ermöglichen.

Auch ist es zu bevorzugen, wenn die Anzahl der eliminierten Messwerte pro vorgebbarer Zeiteinheit erfasst werden, wobei bei der Überschreitung einer vorgebbaren Grenze von eliminierten Messwerten pro Zeiteinheit ein Notlaufprogramm aktiviert wird.

Dies ist vorteilhaft, wenn aufgrund eines starken Aufschäumens oder anhaltend starker Bewegung des Kraftstoffs eine korrekte Erfassung des Füllstandes über einen vorgebbaren Zeitraum nicht möglich ist. Hierzu kann auch ein Abgleich der aktuell ermittelten Messwerte oder der ermittelten Mittelwerte mit zurückliegenden Messwerten durchgeführt werden, um Sprünge im angezeigten Füllstand des Kraftstoffs zu verhindern. Beispielsweise könnte durch eine lange andauernde Bergfahrt aufgrund der Positionierung der Sendeeinheit und/oder der Empfängereinheit eine deutliche Veränderung in der gemessenen Laufzeit entstehen, obwohl der Füllstand sich grundsätzlich nicht wesentlich geändert hat. Um solche Fehlerquellen auszuschließen und insbesondere eine falsche Anzeige des Füllstandes im Kraftfahrzeug zu verhindern, ist es vorteilhaft ein Notlaufprogramm zu aktivieren, welches solche Effekte ausgleicht.

Um trotz solcher Beeinträchtigungen ein Füllstandsignal zur Verfügung zu stellen und somit eine kontinuierliche Anzeige des Signals für den Fahrer sicherzustellen, kann ein Notlaufprogramm aktiviert werden. Die Erhöhung der Anzahl der eliminierten Messwerte pro Zeiteinheit über eine vorgebbare Grenze hinaus kann vorteilhaft als Indikator verwendet werden, der darauf hinweist, dass zeitweise keine konkrete Aussage über den Füllstand erzeugt werden kann.

Weiterhin ist es zweckmäßig, wenn bei der Aktivierung des Notlaufprogramms ein Füllstandsignal ausgegeben wird, dass ausgehend von dem letzten Wert des Füllstandsignals vor Aktivierung des Notlaufprogramms durch Interpolation und/oder Heranziehung eines hinterlegten Kennfeldes fortgebildet wird.

Um dem Fahrer trotz mangelnder Messwerte ein kontinuierliches Füllstandsignal anzuzeigen, kann das Signal mathematisch weitergebildet werden. Hierzu können Zustandsgrößen des Kraftfahrzeugs, beispielsweise die Fahrgeschwindigkeit, die Motorlast, die Drehzahl des Verbrennungsmotors oder ein im Motorsteuergerät erfasster Ist-Verbrauch genutzt werden. Ausgehend von einem letzten als korrekt eingestuften Wert für den Füllstand kann so zumindest temporär eine Fortbildung des Füllstandsignals stattfinden. Auch können in einem der Steuergeräte beziehungsweise in der Recheneinheit Kennfelder hinterlegt sein, die zu einzelnen Betriebssituationen des Kraftfahrzeugs den jeweiligen Kraftstoffverbrauch als Wert ausgeben. Dieser Kraftstoffverbrauch kann unter Erfassung der verstrichenen Zeit mit dem letzten bekannten Wert für den Füllstand verrechnet werden, so dass fortlaufend ein zutreffendes Füllstandsignal ausgegeben werden kann.

Vorteilhafte Weiterbildungen der vorliegenden Erfindung sind in den Unteransprüchen und in der nachfolgenden Figurenbeschreibung beschrieben.

Kurze Beschreibung der Zeichnungen

Im Folgenden wird die Erfindung anhand von einem Ausführungsbeispiel unter Bezugnahme auf die Zeichnung detailliert erläutert. In der Zeichnung zeigt:

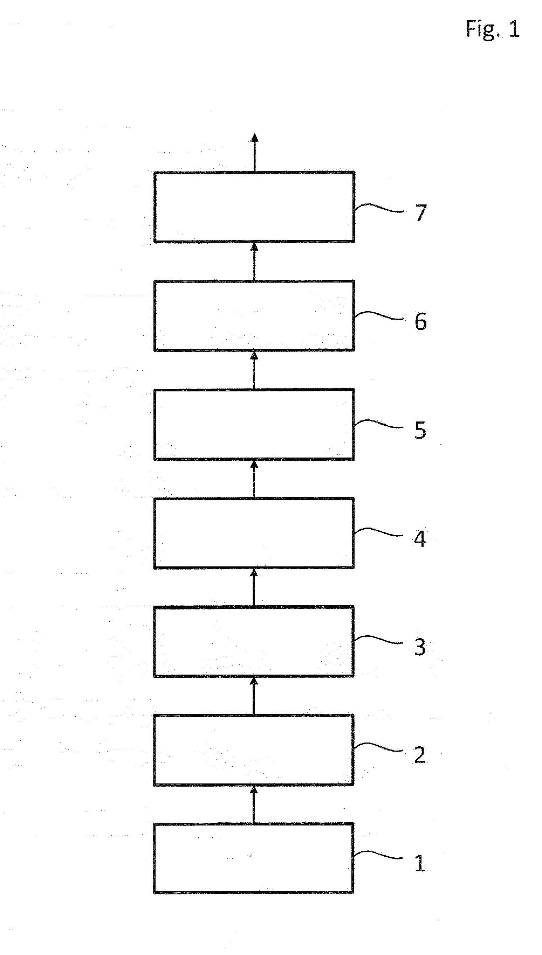

- Fig. 1: ein Blockdiagramm zur Verdeutlichung des erfindungsgemäßen Verfahrens.

Bevorzugte Ausführung der Erfindung

Die Figur 1 zeigt ein Blockdiagramm zur Verdeutlichung des erfindungsgemäßen Verfahrens. In Block 1 wird von einer Sendeeinheit ein Ultraschallsignal ausgesendet. In Block 2 wird das von einer Grenzschicht des Kraftstoffs im Kraftstofftank reflektierte Ultraschallsignal von einer Empfangseinheit empfangen. Im Block 3 wird die Laufzeit des Ultraschallsignals, also die Zeit zwischen Aussendung des Ultraschallsignals und Empfang des Ultraschallsignals, ermittelt.

In Block 4 wird eine Mehrzahl von Messwerten, die jeweils eine ermittelte Laufzeit darstellen, zwischengespeichert. Die Messwerte werden miteinander verglichen und im Block 5 wird ein Filter auf die Messwerte angewendet, der zur Eliminierung einzelner Messwerte führt. Hierzu wird aus einer vorgebbaren Anzahl von aufeinanderfolgenden Messwerten eine Mittelwert oder Durchschnittswert ermittelt. Messwerte die um einen vorgebbaren Betrag oberhalb und/oder unterhalb des Mittelwertes liegen, werden von dem Filter eliminiert. Auf diese Weise werden Extremwerte, die mit hoher Wahrscheinlichkeit für eine fehlerhafte Messung oder einen anderen Störfaktor hinweisen, aussortiert. Dies verhindert die Anzeige von nicht plausiblen Füllstandsignalen auf der Anzeigeeinheit des Kraftfahrzeugs.

Im Block 6 wird ein zweiter Filter auf die Messwerte angewandt. Hierbei handelt es sich um einen Bandpassfilter mit einer unendlichen Impulsantwort. Ein solcher Filter ist insbesondere vorteilhaft, um eine Glättung der gemessenen aufeinanderfolgenden Werte zu erzeugen und somit für ein sich möglichst stetig veränderndes Füllstandsignal zu sorgen. Die Bandpassfrequenz kann hierzu vorgegeben werden.

Im Block 7 wird schließlich ein Füllstandsignal, welches sowohl den ersten Filter als auch den zweiten Filter durchlaufen hat, an eine Anzeigeeinheit des Kraftfahrzeugs ausgeben, wodurch es als Information über den aktuellen Tankinhalt vom Fahrer des Kraftfahrzeugs genutzt werden kann.

Das Ausführungsbeispiel der Figur 1 weist insbesondere keinen beschränkenden Charakter auf und dient der Verdeutlichung des Erfindungsgedankens.

## Patentansprüche

1. Vorrichtung zur Messung des Füllstandes in einem Kraftstofftank eines Kraftfahrzeugs mit einer Sendeeinheit zur Aussendung von Ultraschallsignalen, mit einer Empfangseinheit für den Empfang der reflektierten Ultraschallsignale und mit einer Recheneinheit zur Ermittlung des Füllstandes durch Auswertung der Laufzeit der Ultraschallsignale zwischen Aussendung und Empfang, wobei zur Ermittlung eines Messwertes zumindest ein Ultraschallsignal ausgesendet und empfangen wird, wobei der Füllstand als Füllstandsignal von der Recheneinheit ausgebbar ist, **dadurch gekennzeichnet, dass** die Recheneinheit einen ersten Filter und einen zweiten Filter aufweist, wobei durch den ersten Filter eine Selektion der Messwerte durchführbar ist und durch den zweiten Filter eine Glättung der Messwerte durchführbar ist.

2. Vorrichtung nach Anspruch 1, **dadurch gekennzeichnet, dass** der zweite Filter durch einen Filter mit unendlicher Impulsantwort und mit einer vorgebbaren Bandpassfrequenz gebildet ist.

3. Vorrichtung nach einem der vorhergehenden Ansprüche, **dadurch gekennzeichnet, dass** der erste Filter zur Eliminierung von ungültigen Messwerten ausgebildet ist.

4. Verfahren zum Betreiben einer Vorrichtung nach einem der vorhergehenden Ansprüche, **dadurch gekennzeichnet, dass** das Füllstandsignal durch eine Auswertung der Laufzeit einzelner Ultraschallsignale ermittelt wird, wobei im ersten Filter ungültige Messwerte eliminiert werden, wobei zur Eliminierung ungültiger Messwerte eine vorgebbare Anzahl von aufeinanderfolgenden Messwerten gespeichert wird und die Messwerte im ersten Filter verarbeitet werden, wobei die außerhalb eines vorgebbaren Erwartungsraums liegenden Messwerte eliminiert werden.

5. Verfahren nach Anspruch 4, **dadurch gekennzeichnet, dass** der Erwartungsraum abhängig von einem Durchschnittswert der ermittelten Messwerte festgelegt ist.

6. Verfahren nach einem der vorhergehenden Ansprüche 4 und 5, **dadurch gekennzeichnet, dass** die Verarbeitung der Messwerte im ersten Filter eine Ermittlung der Unterschiede zwischen den einzelnen Messwerten vorsieht, wobei anhand der Unterschiede der Messwerte die Messwerte identifiziert werden, die außerhalb des vorgebbaren Erwartungsraums liegen, wobei diese identifizierten Messwerte eliminiert werden.

7. Verfahren nach einem der vorhergehenden Ansprüche 4 bis 6, **dadurch gekennzeichnet, dass** im ersten Filter Messwerte, die um einen vorgebbaren Betrag oberhalb oder unterhalb eines aus einer Mehrzahl von Messwerten gewonnen Mittelwert liegen, eliminiert werden.

8. Verfahren nach einem der vorhergehenden Ansprüche 4 bis 7, **dadurch gekennzeichnet, dass** der zweite Filter ein Bandpassfilter Filter mit unendlicher Impulsantwort ist, wobei die Bandpassfrequenz des zweiten Filters vorgebbar ist.

9. Verfahren nach einem der vorhergehenden Ansprüche 4 bis 8, **dadurch gekennzeichnet, dass** die Bandpassfrequenz des zweiten Filters 1 Hertz beträgt.

10. Verfahren nach einem der vorhergehenden Ansprüche 4 bis 9, **dadurch gekennzeichnet, dass** die Anzahl der eliminierten Messwerte pro vorgebbarer Zeiteinheit erfasst werden, wobei bei der Überschreitung einer vorgebbaren Grenze von eliminierten Messwerten pro Zeiteinheit ein Notlaufprogramm aktiviert wird.

11. Verfahren nach dem vorhergehenden Anspruch 10, **dadurch gekennzeichnet, dass** bei der Aktivierung des Notlaufprogramms ein Füllstandsignal ausgegeben wird, dass ausgehend von dem letzten Wert des Füllstandsignals vor Aktivierung des Notlaufprogramms durch Interpolation und/oder Heranziehung eines hinterlegten Kennfeldes fortgebildet wird.
